# EUROPEAN PATENT APPLICATION

(11) **EP 1 858 277 A2**
(43) Date of publication of application: **21.11.2007**
(21) Application number: 07009346.3
(22) Date of filing: 09.05.2007
(51) Int. Cl.: H04Q 7/30

(54) **Radio base station system**

(30) Priority: 19.05.2006 JP 2006140121
(71) Applicant: NEC Corporation, Minato-ku Tokyo (JP)
(72) Inventor: Yagawa, Kenichiro, Tokyo 108-8001 (JP)
(74) Representative: Glawe, Delfs, Moll

(57) **Abstract**

A radio base station system includes a processing device for carrying out baseband signal processing and a radio device connected by the CPRI to the processing device for carrying out RF signal processing. The radio device includes a measurement unit for measuring the current state of an object of measurement and supplying measurement data representing this current state as output, and a first communication unit for using Fast C&M Channel fields of the CPRI to transmit the measurement data supplied by the measurement unit to the processing device. The processing device includes a second communication unit that uses Fast C&M Channel fields of the CPRI to receive the measurement data from the first communication unit.

## Description

This application is based upon and claims the benefit of priority from Japanese Patent Application No. 2006-140121 filed on May 19, 2006, the content of which is incorporated by reference.

### Background of the Invention

### 1. Field of the Invention:

The present invention relates to a radio base station system including a baseband signal processor (Radio Equipment Controller, hereinbelow abbreviated "REC") and remote radio equipment (hereinbelow abbreviated "RE") for carrying out RF signal processing, and more particularly to a radio base station system in which an REC and a plurality of RE are connected by a CPRI (Common Public Radio Interface), which is the interface standard.

### 2. Description of the Related Art:

A variety of communication systems are known in the prior art. For example, JP-A-S62-076935 discloses a multichannel access system having a central control station.

In addition, a radio base station system is also known in which the REC and RE that were contained in a radio base station device are separated from the radio base station device and in which the plurality of RE connected by cable to one REC.

CPRI is one interface standard for connecting REC and RE. CPRI includes, for example, Fast C&M Channel fields used in communication between the CPU in the REC and the CPU in the RE.

In the prior art, the Fast C&M Channel fields were left either unused or not effectively used for control in CPRI.

### Summary of the Invention:

It is an object of the present invention to provide a radio base station system that enables effective use of the CPRI Fast C&M Channel fields.

To achieve the above-described object, the radio base station system according to the present invention includes a processing device for carrying out baseband signal processing and a radio device, which is connected to the processing device by CPRI, for carrying out RF signal processing.

The radio device includes a measurement unit and a first communication unit. The measurement unit measures the current state of an object for measurement to supply measurement data that represents the current state. The first communication unit uses the Fast C&M Channel fields of CPRI to transmit to the processing device the measurement data.

The processing device includes a second communication unit for using the Fast C&M Channel fields of CPRI to receive the measurement data from the first communication unit.

The radio base station system according to the present invention includes a processing device for carrying out baseband signal processing and a radio device, which is connected by CPRI to the processing device, for carrying out RF signal processing.

The radio device includes an acceptance unit and a first communication unit. The acceptance unit accepts the measurement data from an outside measurement unit that measures the current state of an object for measurement and supplies measurement data that represent this current state. The first communication unit uses the Fast C&M Channel fields of CPRI to transmit to the processing device the measurement data that are received by the acceptance unit.

The processing device includes a second communication unit that uses the Fast C&M Channel fields of CPRI to receive the measurement data from the first communication unit.

According to the above-described invention, measurement data are transmitted from the radio device to the processing device by way of the Fast C&M Channel fields of CPRI. As a result, the measurement data can be transmitted to the processing device without necessitating a dedicated line, and further, the Fast C&M Channel fields of CPRI can be put to effective use. As a result, the added value of a radio base station system that includes a radio device can be raised, and the transmission path resources can be more effectively used.

The above-described radio base station system is preferably of the following configuration:
The processing device further includes an output unit for supplying a control signal for controlling the measurement unit. The second communication unit uses the CPRI Fast C&M Channel fields to transmit the control signal to the first communication unit. The first communication unit uses the CPRI Fast C&M Channel fields to receive the control signal from the second communication unit and supplies the control signal to the measurement unit.
According to the above-described invention, the control signal is transmitted from the processing device to the measurement unit by way of the CPRI Fast C&M Channel fields. As a result, the control signal can be transmitted to the measurement unit without necessitating a dedicated line, and further, the CPRI Fast C&M Channel fields can be more effectively utilized.

The above-described radio base station system is preferably of the following configuration:
The radio device further includes a first interface for an IP telephone signal. The processing device further includes a second interface for an IP telephone signal. The first and second communication units use the CPRI Fast C&M Channel fields to connect the first and second interfaces.
According to the above-described invention, CPRI Fast C&M Channel fields are used as an IP telephone network between the processing device and radio device. The need for dedicated lines for IP telephone signals between the processing device and radio device can therefore be eliminated and the CPRI Fast C&M Channel fields can be more effectively utilized.

The above and other objects, features, and advantages of the present invention will become apparent from the following description with reference to the accompanying drawings which illustrate an example of the present invention.

### Brief Description of the Drawings:

FIG. 1 is a block diagram showing the REC of the radio base station system of an embodiment of the present invention; and
FIG. 2 is a block diagram showing the RE of the radio base station system of an embodiment of the present invention.

### Detailed Description of the Preferred Embodiments:

A W-CDMA base station system is used as the radio base station system of an embodiment according to the present invention. A W-CDMA base station system includes a baseband signal processing device (hereinbelow abbreviated as "REC") and a plurality of remote radio devices (hereinbelow abbreviated as "RE") and transmits high-speed digital signals. In addition, the REC is connected to the plurality of RE by means of a full duplex optical cable or electrical cable according to a CPRI.

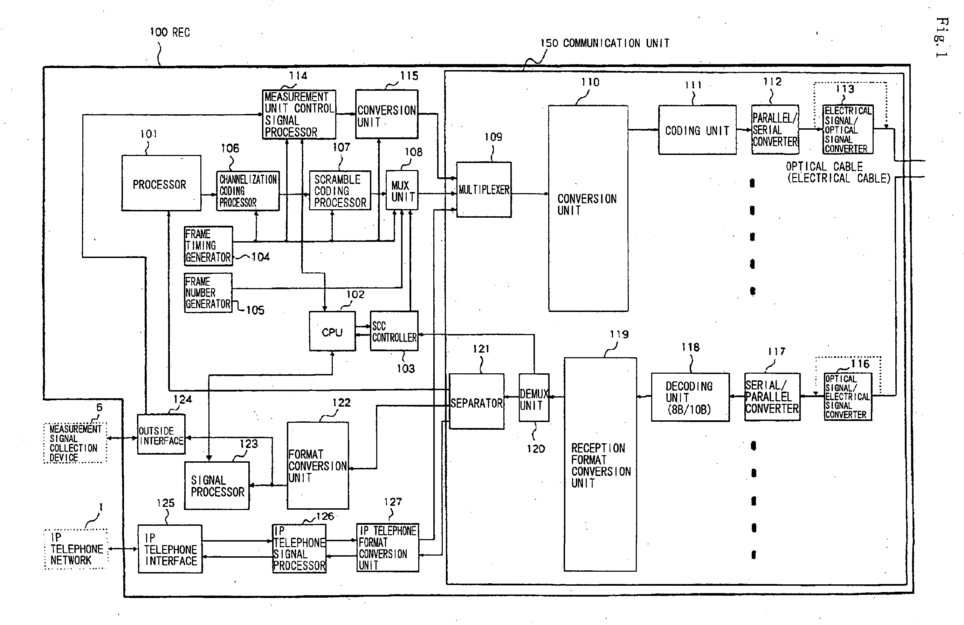

FIG. 1 is a block diagram showing an example of REC 100.

In FIG. 1, REC 100 includes: baseband signal processor/channel coding unit or reception processor (hereinbelow referred to as simply "processor") 101, CPU 102, SCC controller 103, frame timing generator (hereinbelow referred to as simply "generator") 104, and frame number generator (hereinbelow referred to as simply "generator") 105.

REC 100 further includes a downlink transmission system. The downlink transmission system includes: channelization coding processor (hereinbelow referred to as simply "processor") 106, scramble coding processor (hereinbelow referred to as simply "processor") 107, MUX unit (multiplexer) 108, Fast C&M Channel field multiplexer (hereinbelow referred to as simply "multiplexer") 109, format conversion unit for transmission between remote radio devices (hereinbelow referred to as simply "conversion unit") 110, coding unit for high-speed digital signals (hereinbelow referred to as simply "coding unit") 111, parallel/serial converter (hereinbelow referred to as simply "converter") 112, electrical signal/optical signal converter (hereinbelow referred to as simply "converter") 113, measurement unit control signal processor (hereinbelow referred to as simply "processor") 114, and measurement unit control format conversion unit (hereinbelow referred to as simply- "conversion unit") 115.

REC 100 further includes an uplink reception system. The uplink reception system includes: optical signal/electrical signal converter (hereinbelow referred to as simply "converter") 116, serial/parallel converter (hereinbelow referred to as simply "converter") 117, decoding unit for high-speed digital signals (hereinbelow referred to as simply "decoding unit") 118, reception format conversion unit (hereinbelow referred to as simply "conversion unit") 119, DEMUX unit (demultiplexer) 120, Fast C&M Channel field separator (hereinbelow referred to as simply "separator") 121, format conversion unit for measurement unit collection (hereinbelow referred to as simply "conversion unit") 122, signal processor for measurement unit collection (hereinbelow referred to as simply "processor") 123, and outside interface 124.

REC 100 further includes: IP telephone interface 125, IP telephone signal processor (hereinbelow referred to as simply "processor") 126 and IP telephone format conversion unit (hereinbelow referred to as simply "conversion unit") 127. IP telephone interface 125, processor 126 and conversion unit 127 are used for connection with IP telephone network 1.

Communication unit (second communication unit) 150 is made up from:
multiplexer 109, conversion unit 110, coding unit 111, converter 112, converter 113, converter 116, converter 117, decoding unit 118, conversion unit 119, DEMUX unit 120, and separator 121. In addition, processor 114 is one example of an output unit.

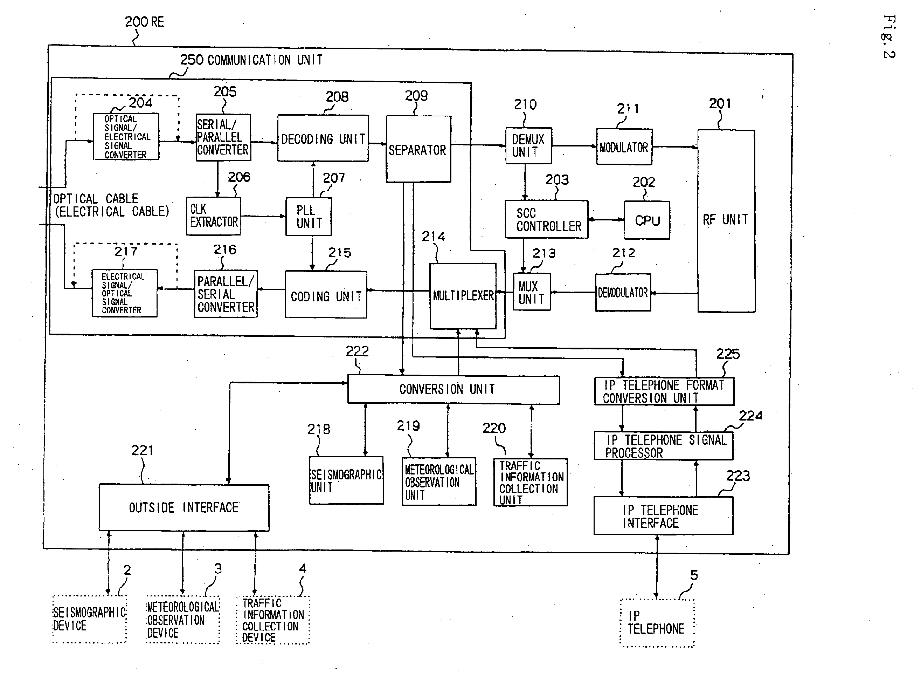

FIG. 2 is a block diagram showing an example of RE 200.

In FIG. 2, RE 200 includes RF unit 201, CPU 202 and SCC controller 203.

RE 200 further includes a downlink transmission system. The downlink transmission system includes: optical signal/electrical signal converter (hereinbelow referred to as simply "converter") 204, serial/parallel converter (hereinbelow referred to as simply "converter") 205, CLK extractor 206, PLL unit 207, decoding unit for high-speed digital signals (hereinbelow referred to as "decoding unit") 208, Fast C&M Channel field separator (hereinbelow referred to as simply "separator") 209, DEMUX unit 210, and modulator 211. RE 200 further includes an uplink reception system. The uplink reception system includes: demodulator 212, MUX unit 213, Fast C&M Channel field multiplexer (hereinbelow referred to as simply "multiplexer") 214, coding unit for high-speed digital signals (hereinbelow referred to as simply "coding unit") 215, parallel/serial converter (hereinbelow referred to as simply "converter") 216, and electrical signal/optical signal converter (hereinbelow referred to as simply "converter") 217.

RE 200 further includes: seismographic unit 218, meteorological observation unit 219, traffic information collection unit 220, outside interface 221, and format conversion unit for transmission between REC and RE (hereinbelow referred to as simply "conversion unit") 222.

Outside interface 221 is connected to outside seismographic device 2, outside meteorological observation device 3 and outside traffic information collection device 4. If RE 200 includes seismographic unit 218, meteorological observation unit 219 and traffic information collection unit 220, outside interface 221 may be omitted. If RE 200 includes outside interface 221, seismographic unit 218, meteorological observation unit 219, and traffic information collection unit 220 may be omitted.

RE 200 further includes: IP telephone interface 223, IP telephone signal processor (hereinbelow referred to as simply "processor") 224, and IP telephone format conversion unit 225. IP telephone interface 223, processor 224 and IP telephone format conversion unit 225 are used for connections with IP telephone 5.

Communication unit (first communication unit) 250 is made up from: converter 204, converter 205, CLK extractor 206, PLL unit 207, decoding unit 208, separator 209, multiplexer 214, coding unit 215, converter 216 and converter 217.

Each of seismographic unit 218, meteorological observation unit 219 and traffic information collection unit 220 are an example of a measurement unit. RE 200 may have at least one of seismographic unit 218, meteorological observation unit 219 and traffic information collection unit 220.

Each of outside seismographic device 2, outside meteorological observation device 3 and outside traffic information collection device 4 is an example of an outside measurement unit. Outside interface 221 may connect with at least one of outside seismographic device 2, outside meteorological observation device-3 and outside traffic information collection device 4.

Communication unit 150 and communication unit 250 use the Fast C&M Channel field of Control Words of CPRI as a dedicated IP transmission path. Communication unit 150 and communication unit 250 use the Fast C&M Channel field of Control Words of CPRI to carry out the control of measurement units and the transfer and collection of the measurement data of measurement units. As a result, communication unit 150 and communication unit 250 are able to control the measurement units as well as transfer and collect measurement data of the measurement units without requiring another dedicated line.

REC 100 and RE 200 further have an IP telephone interface and IP telephone signal processor. Communication unit 150 and communication unit 250 use the Fast C&M Channel field of Control Words of the CPRI as a dedicated IP telephone network between REC 100 and the plurality of RE 200.

In REC 100, processor 101 subjects transmission data to baseband processing and channel coding processing.

Processor 106 subjects the transmission data, which have undergone the baseband process/channel coding process, to a channelization coding process. Processor 107 subjects the transmission data, which have undergone the channelization coding process, to a scramble coding process to generate a digital signal. Processor 107 multiplexes this digital signal for every antenna units. Processor 107 then supplies this digital multiplexed signal to MUX unit 108.

MUX unit 108 multiplexes: the digital multiplexed signal, the inter-CPU communication signal, the frame timing signal in REC 100, the frame number, and the reference CLK.

Under the control of CPU 102 or under the control of outside measurement signal collection device 6, processor 114 generates a control signal for controlling seismographic unit 218, meteorological observation unit 219 or traffic information collection unit 220 in RE 200, or generates a control signal for controlling seismographic device 2, meteorological observation device 3, or traffic information collection device 4 that is connected to RE 200.

Conversion unit 115 converts the format of this control signal to a format for the Ether frames used in IP transmission between REC 100 and RE 200. Conversion unit 115 supplies this control signal, whose format has been altered, to multiplexer 109.

Multiplexer 109 multiplexes this control signal to the digital multiplexed signal in the Fast C&M Channel field of Control Words of the CPRI.

In addition, processor 126 processes the IP telephone signal that IP telephone interface 125 receives from outside IP telephone network 1. Conversion unit 127 converts the format of the processed IP telephone signal to a format for use in Ether frames used in IP transmission between REC and RE.

Multiplexer 109 also multiplexes the IP telephone signal, whose format has been altered, to the digital multiplexed signal.

Conversion unit 110 converts the format of the baseband signal, which has been multiplexed in multiplexer 109, to the format for transmission between remote radio devices. Conversion unit 110 further distributes the signal, whose format has been converted, to any RE among the plurality of RE based on the control of CPU 102.

Coding unit 111 codes the distributed signal by, for example, 8b/10b for performing high-speed digital signal transmission. When the signal is subjected to coding at 8b/10b, the comma code can be used as frame timing. When reference timings are transmitted at timings that differ from the timings for frame recognition and for CHIP recognition, different comma codes can be used. In the present embodiment, coding unit 111 codes this signal at 8b/10b. Converter 112 carries out parallel/serial conversion of the digital signal, which has undergone coding, to generate a high-speed differential digital signal. Converter 113 converts the high-speed differential digital signal, which is an electrical signal, to an optical signal, and transmits this optical signal to RE 200 by way of an optical cable. Converter 113 can also transmit the high-speed differential digital signal to RE 200 unaltered as an electrical signal.

In the plurality of RE 200, converters 204 convert the optical signal, which has been transmitted from REC 100 by means of an optical cable, to an electrical signal (high-speed differential digital signal).

Converter 205 performs serial/parallel conversion of the high-speed differential digital signal that has become an electrical signal to restore the multiplexed signal.

Decoding unit 208 subjects the signal, which has been restored in converter 205, to 8b/10b decoding and supplies the decoded signal to separator 209. Separator 209 separates the control signal and IP telephone signal from this decoded signal, supplies the control signal to conversion unit 222, and supplies the IP telephone signal to conversion unit 225.

Conversion unit 222 returns the format of the control signal to the original format and then supplies this control signal to seismographic unit 218, meteorological observation unit 219, traffic information collection unit 220, seismographic device 2, meteorological observation device 3, or traffic information collection device 4 to control these components.

Conversion unit 225 returns the format of the IP telephone signal to the original format and then supplies this IP telephone signal to processor 224.

Processor 224 processes this IP telephone signal and then supplies this IP telephone signal to outside IP telephone 5 from IP telephone interface 223. Seismographic unit 218, meteorological observation unit 219 and traffic information collection unit 220 carry out the necessary observations and periodically or non-periodically transmit the observation results (measurement data) to REC100.

Conversion unit 222 converts the format of measurement data, which represent the results of observation at each of seismographic unit 218, meteorological observation unit 219, and traffic information collection unit 220, or of measurement data, which are applied to outside interface 221 from each of outside seismographic device 2, meteorological observation device 3, and traffic information collection device 4, to the format for Ether frames used in IP transmission between REC and RE. Conversion unit 222 supplies multiplexer 214 with the measurement data in which the format has been converted.

RF unit 201 carries out transmission and reception of radio signals and supplies the received signals (hereinbelow referred to as "reception data") to demodulator 212. Demodulator 212 demodulates the reception data received from RF unit 201 and supplies these demodulated reception data to MUX unit 213.

MUX unit 213 converts the format of these reception data and then supplies the reception data to multiplexer 214. MUX unit 213 accepts an inter-CPU communication signal from SCC controller.203, multiplexes this inter-CPU communication signal with the reception data, changes the format of the multiplexed signal, and then supplies this multiplexed signal to multiplexer 214. Multiplexer 214 multiplexes the measurement data that is received from conversion unit 222 and the multiplexed signal that is received from MUX unit 213.

Processor 224 processes the IP telephone signal that IP telephone interface 223 has received from outside IP telephone 5 and supplies this IP telephone signal to conversion unit 225.

Conversion unit 225 converts the format of this IP telephone signal to the format for Ether frames for IP communication between REC and RE and supplies this IP telephone signal, whose format has converted, to multiplexer 214.

As with the measurement data, multiplexer 214 multiplexes the IP telephone signal that is received from conversion unit 225 with the multiplexed signal that is received from MUX unit 213.

Multiplexer 214 supplies the multiplexed signal to coding unit 215.

Coding unit 215 subjects this multiplexed signal to 8b/10b coding for carrying out high-speed digital signal transmission and then supplies the coded signal to converter 216.

Converter 216 subjects the signal, which is received from coding unit 215, to serial/parallel conversion to convert to a high-speed differential digital signal and then supplies this high-speed differential digital signal to converter 217. Converter 217 converts the high-speed differential digital signal, which is received from converter 216, to an optical signal and then transmits this optical signal to REC 100 by way of an optical cable.

In REC 100, converter 116 converts the optical signal, which is received from the optical cable, to an electrical signal (high-speed differential digital signal).

Converter 117 subjects this high-speed differential digital signal to serial/parallel conversion. Decoding unit 118 subjects the output of converter 117 to 8b/10 decoding and then supplies the results of decoding to DEMUX unit 120 by way of conversion unit 119.

DEMUX unit 120 separates the inter-CPU communication signal from the signal that is received from conversion unit 119 and supplies this inter-CPU communication signal by way of SCC controller 103 to CPU 102. In addition, DEMUX unit 120 supplies the signal, from which the inter-CPU communication signal has been extracted, to separator 121.

Separator 121 separates the measurement data and IP telephone signal from the signal that is received from DEMUX unit 120 and supplies these measurement data to conversion unit 122 and the IP telephone signal to conversion unit 127. - Conversion unit 122 converts the format of the measurement data that is received from separator 121 to generate measurement data that preceded conversion. Conversion unit 122 supplies these measurement data to processor 123. Conversion unit 122 may also provide the measurement data to outside measurement signal collection device 6 by way of outside interface 124. Processor 123 processes the measurement data that are received from conversion unit 122 and collects the necessary information.

Conversion unit 127 changes the format of the IP telephone signal, which is received from separator.121, to generate the IP telephone signal that preceded alteration. Conversion unit 127 supplies this IP telephone signal to processor 126.

Processor 126 processes the IP telephone signal that is received from conversion unit 127 and supplies this IP telephone signal to outside IP telephone network 1 by way of IP telephone interface 125.

Explanation next regards the operation with reference to FIG. 1 and FIG. 2. In FIG. 1, when processor 101 in the downlink transmission system of REC 100 includes a baseband signal processor and a channel coding unit, processor 101 carries out the processes of baseband signal processing and channel coding processing to generate symbol data (transmission data) from the transmission signal. When processor 101 is a reception processor, processor 101 receives symbol data that are generated outside. Processor 101 supplies these symbol data to processor 106.

Upon receiving the symbol data, processor 106 subjects these symbol data to a channelization coding process. Processor 106 supplies the symbol data, which have undergone the channelization coding process, to processor 107.

Upon receiving these data, processor 107 subjects these data to a scramble coding process to generate a digital signal. Processor 107 multiplexes this digital signal for every antenna units and supplies the multiplexed signal to MUX unit 108.

MUX unit 108 receives the signal supplied from processor 107, a frame timing signal generated in generator 104, and frame numbers generated in generator 105, and further, receives through the plurality of SCC controllers 103 inter-CPU communication signals for carrying out communication between CPUs such as SCC communication with each CPU of the plurality of RE, multiplexes these signals, and supplies the multiplexed digital signal to multiplexer 109.

At this time, a special code of coding for high-speed digital communication may be assigned as the frame timing signal.

For example, when 8b/10b coding is adopted as the coding for high-speed digital communication, comma codes can be used as the frame timing signal, and when the reference timings are transmitted at different timings for frame timing recognition and for CHIP timing recognition, different comma codes can be used. The frame number and inter-CPU communication signal are periodically inserted with the frame timing signals as a reference and transmitted.

In addition, processor 114 generates a control signal which indicates changes in the transmission spacing of measurement data, observation periods, and instructions for starting and stopping the transmission of the measurement data that are transmitted by each of seismographic unit 218, meteorological observation unit 219, and traffic information collection unit 220 that are provided in RE 200. Processor 114 supplies this control signal to conversion unit 115.

Upon receiving the control signal, conversion unit 115 converts the format of the control signal to the format for Ether frames for IP transmission between REC and RE and supplies this control signal whose format has been converted (hereinbelow referred to as "post-conversion control signal") to multiplexer 109. In addition, processor 126 processes the IP telephone signal received from IP telephone interface 125 and supplies the IP telephone signal that has undergone processing to conversion unit 127.

Upon receiving this IP telephone signal, conversion unit 127 converts the format of this IP telephone signal to the format for Ether frame for IP transmission between REC and RE and supplies this IP telephone signal whose format has been converted (hereinbelow referred to as "post-conversion IP telephone signal") to multiplexer 109.

Multiplexer 109 multiplexes the digital signal, which has been subjected to the scramble coding process and received from MUX unit 108, the post-conversion control signal and the post-conversion IP telephone signal, and then supplies the multiplexed digital signal to conversion unit 110.

Based on the control of CPU 102, conversion unit 110 selects from among the plurality of RE that are connected to REC 100 the RE that is to be provided with the signal (the digital signal in which are multiplexed the multiplexed digital signal in reception antenna units, the post-conversion control signal, and the post-conversion IP telephone signal) received from multiplexer 109. Conversion unit 110 supplies the signal received from multiplexer 109 (the multiplexed digital signal) to coding unit 111 that corresponds to the selected RE.

Upon receiving this multiplexed digital signal, coding unit 111 subjects this digital signal to coding (for example, 8b/10b coding) and supplies the digital signal that has undergone coding to converter 112.

Upon receiving the digital signal that has undergone coding such as 8b/10b coding, converter 112 subjects this digital signal to parallel/serial conversion to generate a high-speed differential digital signal such as LVDS or LCPECL. Converter 112 supplies this high-speed differential digital signal to converter 113.

Upon receiving the high-speed differential digital signal, which is an electrical signal, converter 113 converts this electrical signal to an optical signal and supplies this optical signal. This optical signal is transmitted to RE 200 by way of an optical cable. When REC 100 is connected with RE 200 by means of an electrical cable, converter 113 supplies this electrical signal to RE 200 by way of the electrical cable.

In the downlink transmission system of RE 200 shown in FIG. 2, converter 204 converts the optical signal received from REC 100 by way of an optical cable to an electrical signal to generate a high-speed differential digital signal that is an electrical signal. Converter 204 supplies this high-speed differential digital signal to converter 205. When converter 204 receives an electrical signal (high-speed differential digital signal) from RE 100 by way of an electrical cable, converter 204 supplies this high-speed differential digital signal to converter 205.

Upon receiving the high-speed differential digital signal, converter 205 converts this high-speed differential digital signal to a parallel digital signal. Converter 205 supplies the digital signal that has undergone parallel conversion to CLK extractor 206 and decoding unit 208.

Upon receiving the digital signal, CLK extractor 206 extracts reception CLKs from this digital signal.

Upon receiving the digital signal, decoding unit 208 decodes the digital signal and supplies the decoded digital signal to separator 209.

Separator 209, having received the digital signal, separates the post-conversion control signal and post-conversion IP telephone signal from the digital signal. Separator 209 supplies this post-conversion control signal to conversion unit 222, supplies the post-conversion IP telephone signal to conversion unit 225, and supplies the digital signal, from which the post-conversion control signal and post-conversion IP telephone signal have been removed, to DEMUX unit 210.

DEMUX unit 210, having received the digital signal from separator 209, separates the digital signal that has undergone the scramble coding process and the inter-CPU communication signal from the digital signal. DEMUX 210 supplies the digital signal that has undergone scramble coding to modulator 211, and supplies the inter-CPU communication signal to SCC controller 203. DEMUX unit 210 includes a frame timing extractor and a frame number extractor, the frame timing extractor extracting the frame timing from the digital signal. This frame timing is not only used in a later section, but is also used as the frame timing signal in the uplink reception system. The frame number extractor extracts the frame number from the digital signal and supplies this frame number to CPU 202.

Modulator 211, upon receiving the digital signal that has undergone scramble coding, modulates the digital signal and supplies the modulated signal to RF unit (chiefly AMP) 201. RF unit 201 transmits this signal wirelessly.

Upon receiving the inter-CPU communication signal, SCC controller 203 supplies this inter-CPU communication signal to CPU 202.

Conversion unit 222, having received the post-conversion control signal, converts the format of the post-conversion control signal to the format before conversion to generate the control signal.

Conversion unit 222 supplies this control signal to seismographic unit 218, meteorological observation unit 219, or traffic information collection unit 220 to control these components.

Conversion unit 222 may supply this control signal by way of outside interface 221 to outside seismographic device 2, outside meteorological observation device 3, or outside traffic information collection device 4 to control these devices.

Conversion unit 225, upon receiving the post-conversion IP telephone signal, inverts this post-conversion IP telephone signal to generate the IP telephone signal that preceded conversion. Conversion unit 225 supplies this IP telephone signal to processor 224.

Processor 224 receives this IP telephone signal, processes the IP telephone signal, and transmits the results of processing to outside IP telephone 5 by way of IP telephone interface 223.

Seismographic unit 218 measures the seismic intensity of earthquakes and supplies measurement data that represent the measurement results as a digital signal to conversion unit 222.

Meteorological observation unit 219 periodically measures phenomena such as temperature, precipitation, wind direction and velocity, and sunshine, and supplies measurement data that represent the results of these measurements as a digital signal to conversion unit 222.

Traffic information collection unit 220 periodically measures traffic congestion information and supplies measurement data that represent these measurement results as digital signal to conversion unit 222.

Outside interface 221, after receiving similar measurement data from seismographic device 2, meteorological observation device 3, or traffic information collection device 4, supplies these measurement data to conversion unit 222.

Upon receiving measurement data, conversion unit 222 converts the format of these measurement data to a format for Ether frames for IP communication between REC and RE to generate post-conversion measurement data, and supplies these post-conversion measurement data to multiplexer 214.

In the reception system of RE 200, RF unit 201, after receiving a signal, supplies this reception signal to demodulator 212.

Demodulator 212, having received the reception signal, demodulates the reception signal to generate a digital signal and supplies this digital signal to MUX unit 213.

MUX unit 213, after receiving the digital signal, converts the formats of this digital signal, the inter-CPU communication signal received from SCC controller 203, and the frame timing signal received from the frame timing extractor in DEMUX unit 210. In this case, a special code for high-speed digital signal may be adopted as the frame timing, as in the transmission system.

MUX unit 213 supplies the signal whose format has been converted to multiplexer 214.

Multiplexer 214 multiplexes the signal whose format has been converted and the post-conversion measurement data that is received from conversion unit 222 and supplies the multiplexed signal to coding unit 215.

Processor 224 processes the IP telephone signal that IP telephone interface 223 receives from outside IP telephone 5 and supplies this IP telephone signal to conversion unit 225.

Conversion unit 225 converts the format of this IP telephone signal to a format for Ether frames for IP transmission between REC and RE to generate a post-conversion IP telephone signal and supplies this post-conversion IP telephone signal to multiplexer 214.

Multiplexer 214 multiplexes the post-conversion IP telephone signal that is received from conversion unit 225 with the multiplexed signal received from MUX unit 213, as with the post-conversion measurement data.

Upon receiving this multiplexed signal, coding unit 215 codes this signal (for example, by 8b/10b coding) and supplies the coded signal to converter 216. Converter 216 subjects this coded signal to serial conversion to generate a high-speed differential digital signal and supplies this high-speed differential digital signal to converter 217.

Upon receiving this high-speed differential digital signal, which is an electrical signal, converter 217 converts this electrical signal to an optical signal and supplies the optical signal. This optical signal is transmitted to REC 100 by way of an optical cable. When REC 100 is connected to RE 200 by way of an electrical cable, converter 217 supplies this electrical signal to REC 100 by way of the electrical cable.

Referring to FIG. 1, in the reception system of REC 100, converter 116 converts the optical signal received from RE 200 by way of an optical cable to an electrical signal to generate a high-speed differential digital signal and supplies the high-speed differential digital signal to converter 117. When converter 116 receives an electrical signal (high-speed differential digital signal) from RE 200 by way of an electrical cable, converter 116 supplies this high-speed differential digital signal to converter 117.

Converter 117, upon receiving the high-speed differential digital signal, subjects this high-speed differential digital signal to serial/parallel conversion. Converter 117 supplies the parallel-converted digital signal to decoding unit 118.

Decoding unit 118, having received the digital signal, decodes the digital signal by 8b/10b and then supplies the decoded digital signal by way of conversion unit 119 to DEMUX unit 120.

DEMUX unit 120 separates the inter-CPU communication signal from the decoded digital signal and supplies this inter-CPU communication signal to CPU 102 by way of SCC controller 103, and further, supplies the digital signal from which the inter-CPU communication signal has been extracted to separator 121.

Upon receiving the digital signal, separator 121 separates the digital signal into a digital signal that is based on the reception signal, post-conversion measurement data, and a post-conversion IP telephone signal.

Separator 121 supplies the digital signal that is based on the reception signal to processor 101, supplies the post-conversion measurement data to conversion unit 122, and supplies the post-conversion IP telephone signal to conversion unit 127.

Upon receiving the digital signal, processor 101 subjects the digital signal to a baseband signal process.

On the other hand, conversion unit 122 converts the format of the post-conversion measurement data to generate the measurement data that preceded conversion and supplies these measurement data to processor 123.

Upon receiving these measurement data, processor 123 processes these measurement data to collect the necessary information. Conversion unit 122 may also provide these measurement data to outside measurement signal collection device 6 by way of outside interface 124.

Conversion unit 127 changes the format of the post-conversion IP telephone signal to generate the IP telephone signal that preceded conversion and supplies this IP telephone signal to processor 126.

Processor 126, having received the IP telephone signal, processes the IP telephone signal and supplies this IP telephone signal to outside IP telephone network 1 by way of IP telephone interface 125.

A dedicated IP telephone network is thus established between REC and RE. The embodiment provides the following effects:
It is possible to provide a W-CDMA base station device having an RE that has a seismographic function, a meteorological observation function, or a traffic information collection function.
It is possible to collect measurement data by using W-CDMA base station equipment (chiefly the transmission path).
It is possible to use the Fast C&M Channel fields of the control fields of the CPRI as a dedicated IP transmission path for measurement data and control signals.

Because a dedicated IP telephone network can be established by means of W-CDMA base station equipment, it is possible to use this dedicated IP telephone network as the dedicated telephone without affecting typical lines at times such as when setting or maintaining RE.

According to the present embodiment, measurement data are transmitted from RE 200 to REC 100 by way of the Fast C&M Channel fields of the CPRI. As a result, measurement data can be transmitted to REC 100 without necessitating dedicated lines, and the Fast C&M Channel fields of the CPRI can be more effectively utilized. The present embodiment can therefore augment the added value of a radio base station system having RE and effectively utilize transmission path resources.

In addition, in the present embodiment, REC 100 uses the Fast C&M Channel fields of the CPRI to transmit control signals to RE 200. RE 200 uses the Fast C&M Channel fields of the CPRI to receive control signals from REC 100 and supplies these control signals to measurement units.

In this case, the control signals are transmitted from REC 100 to the measurement units by way of the Fast C&M Channel fields of CPRI. As a result, control signals can be transmitted to measurement units without necessitating dedicated lines, and the Fast C&M Channel fields of the CPRI can be more effectively utilized.

In the present embodiment, moreover, REC 100 and RE 200 further use Fast C&M Channel fields of the CPRI to connect IP telephone interfaces 125 and 223.

In this case, the Fast C&M Channel fields of the CPRI are used as an IP telephone network between REC 100 and RE 200. As a result, a dedicated line for IP telephone signals between REC 100 and RE 200 is not necessary, and the Fast C&M Channel fields of the CPRI can be more effectively utilized.

Each of the measurement units can be modified as appropriate without limitation to the above example. In addition, the number of RE 200 connected to REC 100 can also be modified as appropriate.

While a preferred embodiment of the present invention has been described using specific terms, such description is for illustrative purposes only, and it is to be understood that changes and variations may be made without departing from the spirit or scope of the following claims.

## Claims

1. A radio base station system comprising a processing device for carrying out baseband signal processing and a radio device, which is connected to said processing device by CPRI, for carrying out RF signal processing, wherein:
said radio device includes:
a measurement unit for measuring a current state of an object for measurement to supply measurement data that represent the current state; and
a first communication unit for using Fast C&M Channel fields of said CPRI to transmit to said processing device said measurement data that are supplied by said measurement unit; and
said processing device includes:
a second communication unit for using the Fast C&M Channel fields of said CPRI to receive said measurement data from said first communication unit.

2. A radio base station system comprising a processing device for carrying out baseband signal processing and a radio device, which is connected to said processing device by CPRI, for carrying out RF signal processing, wherein:
said radio device includes:
an acceptance unit for accepting measurement data from an outside measurement unit that measures a current state of an object for measurement to supply said measurement data that represents the current state; and
a first communication unit for using Fast C&M Channel fields of said CPRI to transmit to said processing device said measurement data that are accepted by said acceptance unit; and
said processing device includes:
a second communication unit for using the Fast C&M Channel fields of said CPRI to receive said measurement data from said first communication unit.

3. The radio base station system according to claim 1 or claim 2, wherein:
said processing device further includes an output unit for supplying a control signal for controlling said measurement unit;
said second communication unit uses the Fast C&M Channel fields-of said CPRI to transmit said control signal supplied by said output unit to said first communication unit; and
said first communication unit uses Fast C&M Channel fields of said CPRI to receive said control signal from said second communication unit and supplies said control signal to said measurement unit.

4. The radio base station system according to any one of claims 1 to 3, wherein:
said radio device further includes a first interface for an IP telephone signal;
said processing device further includes a second interface for an IP telephone signal; and
said first and second communication units use Fast C&M Channel fields of said CPRI to connect said first and second interfaces.
